(19)

**Europäisches Patentamt**

**European Patent Office**

**Office européen des brevets**

(11) **EP 4 626 036 A1**

(12) **EUROPEAN PATENT APPLICATION**

(43) Date of publication:
01.10.2025 Bulletin 2025/40

(21) Application number: 24166701.3

(22) Date of filing: 27.03.2024

(51) International Patent Classification (IPC):
*H04R 25/00* (2006.01)     *G06N 3/045* (2023.01)
*G06N 3/063* (2023.01)

(52) Cooperative Patent Classification (CPC):
**H04R 25/507; G06N 3/045; G06N 3/063;**
H04R 2225/43

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **GN Hearing A/S**
**2750 Ballerup (DK)**

(72) Inventor: **PEDERSEN, Brian Dam**
**DK-2750 Ballerup (DK)**

(74) Representative: **Aera A/S**
**Niels Hemmingsens Gade 10, 5th Floor**
**1153 Copenhagen K (DK)**

(54) **HEARING DEVICE WITH LOW POWER NEURAL NETWORK**

(57)    A hearing device and related method is disclosed, the hearing device comprising a set of input transducers for provision of transducer input data, the set of input transducers comprising a first input transducer for provision of a first transducer input signal as part of the transducer input data; a processor for processing transducer input data and providing an electrical output signal based on the transducer input data; and a receiver for converting the electrical output signal to an audio output signal, wherein the processor is configured to apply a neural network to a network input based on the transducer input data for provision of a network output, the electrical output signal based on the network output, wherein the network input has a first data type and weights of the neural network have a second data type different from the first data type.

Fig. 1

**EP 4 626 036 A1**

## Description

The present disclosure relates to a hearing device and related methods including a method of operating a hearing device. In particular, hearing devices and methods with neural network processing of transducer input data, e.g. microphone input data, are presented.

## BACKGROUND

Hearing devices implementing machine learning and deep neural networks (DNNs) attract increased attention, however DNNs are computationally costly and can potentially negatively impact the efficiency of a hearing device.

## SUMMARY

Accordingly, there is a need for hearing devices and methods with improved implementation of DNNs.

A hearing device is disclosed. The hearing device comprises a set of input transducers for provision of transducer input data, the set of input transducers comprising a first input transducer, such as a first microphone, for provision of a first transducer input signal, such as a first microphone input signal, as part of the transducer input data. The set of input transducers optionally comprises a second input transducer, such as a second microphone, e.g. for provision of a second transducer input signal, such as a second microphone input signal, as part of the transducer input data. The hearing device comprises a processor for processing transducer input data, such as microphone input data, e.g. the first microphone input signal and/or the second microphone input signal, and for providing an electrical output signal based on the transducer input data. The hearing device comprises a receiver for converting the electrical output signal to an audio output signal. The processor is configured to apply a machine learning model/neural network, e.g. to a network input based on the transducer input data, such as microphone input data, for provision of a network output, wherein the electrical output signal is based on the network output. The network input and/or one or more layer input(s)/output(s) of the neural network optionally has a first data type. Weights and/or other parameters of the neural network may have a second data type different from the first data type.

Further, a method of operating a hearing device is provided, the method comprising obtaining transducer input data. The method comprises applying a neural network comprising weights to a network input based on the transducer input data for provision of a network output. The network input is of a first data type and/or weights of the neural network may be of a second data type different from the first data type. The method comprises providing an electrical output signal based on the network output.

It is an advantage of the present disclosure that the hearing device provides improved efficiency of processing of the transducer input data obtained by the hearing device. For example, power and memory efficient computing or processing is enabled by the second data type while maintaining a suitable precision and/or dynamic range in the audio processing by the first data type. For example, the hearing device may enable two or more data formats and/or data types thereby enabling the conversion of one or more data formats and/or data types to be bypassed. For example, the disclosed hearing device and method may enable transducer input data and/or network input having a first data type and weights of a neural network having a second format type to be processed, via a processor of the hearing device, without requiring conversion of the data type, thereby enabling improved efficiency of the hearing device, such as improved efficiency of the processor of the hearing device.

The hearing device may enable increased memory or storage efficiency via the use of fixed point numbers as the second data type. For example, the second data type, such as fixed point number matrices, may have less than 50% computational cost compared with the first data type, such as floating point number matrices, e.g., BFLOAT matrices.

Use of floating point numbers as network input by the hearing device may enable improved efficiency of computational calculations performed by the hearing device, thereby enabling improved efficiency of the hearing device. Further, the use of floating point numbers (e.g., 8 bit precision) by the hearing device may enable a larger dynamic range than the fixed point number data, thereby reducing error buildup, such as error buildup associated with recursion in the neural network.

Advantageously, calculations, such as multiplication, involving the floating point number data may for example be carried out by the hearing device, such as by a processor of the hearing device, with improved efficiency e.g., as the floating point number data may enable 8x8 multipliers to be performed.

It is an important advantage of the hearing device that the hearing device may be configured to perform one or more operations using different data types, such as fixed point numbers and floating point numbers. The use by the hearing device of the different data types may for example enable improved efficiency of storage of weights in the hearing device, e.g. due to the fixed point number data, and/or improved data processing efficiency/precision of the hearing device, e.g. due to the floating point number data.

Further, by enabling the transducer input data/network input to have the first data type and the weights to have the second data type, an 8 by 8 multiplier may be used, such as instead of an 8 by 16 multiplier being used, while maintaining an accurate and/or reliable output of the multiplier, such as an accurate and/or robust network output, such as network output of the neural network. Thus, the use of simpler multipliers in the neural network is provided for.

BRIEF DESCRIPTION OF THE DRAWINGS

The above and other features and advantages of the present invention will become readily apparent to those skilled in the art by the following detailed description of exemplary embodiments thereof with reference to the attached drawings, in which:

Fig. 1 schematically illustrates an exemplary hearing device according to this disclosure,

Fig. 2 schematically illustrates a neural network according to this disclosure,

Fig. 3 schematically illustrates a neural network layer according to this disclosure,

Fig. 4 illustrates multiplication of a floating point number with a fixed point number, and

Fig. 5 is a flow diagram of an exemplary method according to this disclosure.

DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A hearing device is disclosed. The hearing device may be configured to be worn at an ear of a user and may be a hearable or a hearing aid, wherein the processor is configured to compensate for a hearing loss of a user.

In some examples, the hearing device may be an earbud, a headphone, or a hearing aid, etc.

The hearing device may be a hearing aid of the behind-the-ear (BTE) type, in-the-ear (ITE) type, in-the-canal (ITC) type, receiver-in-canal (RIC) type, receiver-in-the-ear (RITE) type or microphone-and-receiver-in-the- ear (MaRIE) type. The hearing device may be a binaural hearing aid in a binaural hearing system. The binaural hearing system may comprise a first hearing aid and a second hearing aid, wherein the first hearing aid and/or the second hearing aid may be the hearing device(s) as disclosed herein.

The hearing device may be configured for wireless communication with one or more devices, such as with another hearing device, e.g. as part of a binaural hearing system, and/or with one or more accessory devices, such as a smartphone and/or a smart watch. Accordingly, the hearing device may comprise a transceiver module. The hearing device/transceiver module optionally comprises an antenna for converting one or more wireless input signals, e.g. a first wireless input signal and/or a second wireless input signal, to antenna output signal(s). The wireless input signal(s) may origin from external source(s), such as spouse microphone device(s), wireless TV audio transmitter, and/or a distributed microphone array associated with a wireless transmitter. The wireless input signal(s) may origin from another hearing device, e.g. as part of a binaural hearing system, and/or from one or more accessory devices.

The hearing device/transceiver module optionally comprises a radio transceiver coupled to the antenna for converting the antenna output signal to a transceiver input signal/transceiver input data. Wireless signals from different external sources may be multiplexed in the radio transceiver to a transceiver input signal or provided as separate transceiver input signals on separate transceiver output terminals of the radio transceiver. The hearing device may comprise a plurality of antennas and/or an antenna may be configured to be operate in one or a plurality of antenna modes. The transceiver input signal optionally comprises a first transceiver input signal representative of the first wireless signal from a first external source.

The hearing device comprises a set of transducers, such as microphones. The set of transducers may comprise one or more transducers, e.g., one or more microphones. The set of transducers comprises a first transducer, such as a first microphone, for provision of a first transducer input signal and/or a second transducer, such as a second microphone, for provision of a second transducer input signal. The set of transducers may comprise $J$ transducers for provision of $J$ transducer signals, wherein $J$ is an integer in the range from 1 to 10. In one or more exemplary hearing devices, the number $J$ of transducers is two, three, four, five or more. The set of transducers may comprise a third transducer, such as a third microphone, for provision of a third transducer input signal.

The hearing device comprises a processor for processing input data/input signals, such as transceiver input signal(s)/data and/or microphone input data/signal(s). The processor is optionally configured to compensate for hearing loss of a user of the hearing device. The processor provides an electrical output signal based on the input data/input signals to the processor. For example, a transceiver input terminal of the processor may be connected to a transceiver for receiving transceiver input signal. One or more transducer input terminals of the processor may be connected to respective one or more transducers of the set of transducers.

The hearing device, such as the processor, optionally comprises a pre-processor for provision of the network input to the neural network based on the transducer input data. The pre-processor may be connected to the radio transceiver for provision of the network input to the network based on the transceiver input signal. In one or more examples, the pre-processor may be configured to transform the transducer input data, such as microphone input data, and/or transceiver input data to the network input, e.g. by a conversion from a data type to the first data type, frequency transformation, log operations, or combinations thereof.

It is noted that descriptions and features of hearing device functionality, such as hearing device configured to, also apply to methods and vice versa. For example, a description of a hearing device configured to determine also applies to a method, e.g. of operating a hearing device, wherein the method comprises determining and vice versa.

A hearing device is disclosed. The hearing device comprises a set of input transducers, e.g. a set of microphones, for provision of transducer input data, such as microphone input data. The set of input transducers comprises a first input transducer, such as a first microphone, for provision of a first transducer input signal, such as a first microphone input signal also denoted first microphone input data. The set of input transducers may comprise a second input transducer, such as a second microphone, for provision of a second transducer input signal, such as a second microphone input signal also denoted second microphone input data. The first microphone input data and/or the second microphone input data may form at least a part of the microphone input data/transducer input data.

The set of input transducers, e.g., comprising the first microphone, may for example be configured to provide, such as generate, the first transducer input data. The transducer input data for example comprises the first transducer input data, such as the first transducer input signal. The transducer input data for example comprises the second transducer input data, such as the second transducer input signal.

The transducer input data may for example be obtained, e.g., via the set of input transducers, based on audio. For example, the set of input transducers may be configured to generate, e.g., based on an audio input, transducer input data.

The hearing device comprises a processor for processing transducer input data, such as microphone input data, and providing an electrical output signal based on the transducer input data, such as the microphone input data. The processor may be configured to apply a neural network to a network input for provision of a network output, the network input based on the transducer input data, such as the microphone input data, for example based on the first transducer input signal and/or the second transducer input signal. The electrical output signal is based on, e.g. being a function of, the network output. The network input and/or the transducer input data, such as the microphone input data, has a first data type. Parameters, such as weights, of the neural network may have a second data type different from the first data type of the network input/transducer input data. The hearing device comprises a receiver for converting the electrical output signal to an audio output signal.

The first transducer input signal can for example be a first microphone input signal from a first microphone. The second transducer input signal can for example be a second microphone input signal from a second microphone. In other words, the first microphone input signal may constitute the first transducer input signal and/or the second microphone input signal may constitute the second transducer input signal. The transducer input data, such as microphone input data, may be pre-processed, e.g. in a pre-processor external to or integrated in the processor, before being fed as network input to the neural network.

The first data type, e.g., floating point numbers, may for example have a higher precision than the second data type, e.g., fixed point numbers. The precision allowed by the second data type may thus be unsatisfactory for the network input and/or the transducer input data. Therefore, the network input may have a first data type. It may be appreciated that the precision allowed by the second data type may be satisfactory for the weights or other parameters, while enabling a reduction in the required storage, such as memory, e.g., relating to the lower precision of the second data type compared to the first data type.

It may be appreciated that use of the second data type/fixed point numbers may result in error build-up, especially in a recursive neural network. The first data type may for example have a larger dynamic range than that of the second data type, thereby enabling recursion without error build up. Therefore, the disclosed hearing device enabling processing the first data type and the second data type may be advantageous.

In other words, the first data type may enable improved computational accuracy, such as by reducing error build-up, such as recursive error build-up and the second data type may enable improved, such as reduced, data storage.

The processor may for example be configured to obtain, e.g., from or via the set of input transducers, the transducer input data. In other words, the processor may for example be configured to receive and/or retrieve e.g., from or via the set of input transducers, the transducer input data.

The processor may for example be configured to generate, e.g., based on the transducer input data, an electrical output signal. For example, the processor may be configured to generate the electrical output signal, e.g., including to apply the neural network to the network input based on the transducer input data and/or transceiver input data.

The electrical output signal is for example an electrical output signal of the processor. The electrical output signal can for example be seen as an electrical signal provided by the processor as an output.

The neural network may for example be configured to take the transducer input data and/or pre-processed transducer input data as network input, where the transducer input data for example has a first data type. The output of the neural network for example comprises the network output. The network output can for example be seen as an output of the neural network. The network output is for example based on the network input/transducer input data. In other words, the network input may be of or have the first data type. In one or more examples, the network input is a 64-channel magnitude FFT input, e.g. where each channel input is of the first data type.

In some examples, the neural network may generate the network output, e.g., based on the transducer input data/network input. In some examples, the network output is provided, such as generated, based on the transducer input data. In other words, in some examples, the neural network is applied to the input transducer data and/or or to the network input, e.g., for provision, such as generation, of the network output. In one or more examples, the network input is based on the input transducer data such as the microphone input data. The network input may be based on transceiver input data from the transceiver module.

The receiver is for example configured to output the obtain, e.g., receive and/or retrieve the electrical output signal, such as from the processor. The receiver is for example configured to determine, such as generate the audio output signal, e.g., based on the electronic output signal. In some examples, the receiver is configured to provide, such as output, the audio output signal.

In one or more examples, a hearing device is disclosed, the hearing device comprising a set of input transducers for provision of transducer input data, the set of input transducers comprising a first input transducer for provision of a first transducer input signal as part of the transducer input data; a processor for processing transducer input data and providing an electrical output signal based on the transducer input data; and a receiver for converting the electrical output signal to an audio output signal, wherein the processor is configured to apply a neural network to a network input based on the transducer input data for provision of a network output based on the transducer input data, the electrical output signal based on the network output, wherein the network input has a first data type and weights of the neural network have a second data type different from the first data type.

The transducer input data, such as the first microphone input data and/or the second microphone input data, may have a first data type or a data type different from the first data type, such as the second data type. In one or more examples, the first data type is a floating point number. The floating point number can for example be seen as a number comprising a floating, such as non-fixed, point. The floating point can for example be seen as a floating binary point and/or a floating radix point. The transducer input data for example comprises one or more floating point numbers. For example, the transducer input data can be seen as comprising one or more floating point numbers. In some examples, the floating point number may be seen as a low precision floating point number.

In one or more examples, the network input and/or the transducer input data, such as the first microphone input data and/or the second microphone input data, are M-bit numbers, e.g. where $M \geq 12$. For example, the network input and/or the transducer input data can be seen as comprising one or more M-bit numbers. The M-bit number can for example be a floating point number, e.g., comprising M bits. In one or more examples, $M > 8$, e.g. in the range from 12 to 18. The M-bit number may comprise M1 bits indicative of an exponent. M1 may be 3, 4, or 5. The M-bit number may comprise M2 bits indicative of mantissa or fraction. M2 may be in the range from 4 to 12, such as 8 or 10. In one or more examples, M2=N. The M-bit number may comprise a sign bit also denoted M3.

The M-bit number may be a 12- bit number or a 16-bit number. For example, the M-bit number, such as the 16-bit floating point number may, be seen as a BFLOAT. The M-bit number may for example be a 12-bit number, a 24-bit number, a 32-bit number, a 64-bit number, a 128-bit number, etc. The value of M is not limiting. Further, the network input and/or the transducer input data, such as the first microphone input data and/or the second microphone input data, may be in any representation that can be converted to a floating point number, such as 8-bit FLOAT, 12-bit FLOAT, or 16-bit BFLOAT or IEEE half precision float data, i.e. the first data type may be 8-bit FLOAT, 12-bit FLOAT, or 16-bit BFLOAT or IEEE half precision float

The M-bit number (first data type) may be a half-precision floating-point number, e.g. as defined in IEEE-754. In other words, the network input and/or the transducer input data may be half-precision floating-point format also denoted FP16 or float16, e.g. a 16-bit number with M1=5, M2=10, and M3=1.

Weights or at least some weights of the neural network may have a second data type. The second data type may be different from the first data type. In one or more examples, the first data type has more bits than the second data type.

In one or more example hearing devices, the second data type is a fixed point number. The fixed point number can for example be seen as number comprising a fixed point. The fixed point can for example be seen as a fixed radix point and/or a fixed binary point. In some examples, the fixed point number may be seen as a low precision fixed point number.

The weights for example comprise one or more fixed point numbers. For example, a value of the network in the neural network may be multiplied by a weight, such as by a fixed point number. The weights can for example be seen as comprising one or more fixed point numbers.

In some examples, the weights may be stored in one or more weight matrices. In one or more examples, a weight matrix, such a one or more weight matrices of the first layer and/or second layer of the neural network may be a 192x128 matrix. In other words, one or more weight matrices of the first layer and/or second layer of the neural network may have at least 64 columns and at least 32 rows.

In one or more example hearing devices, the weights are N-bit numbers, e.g. where $N \leq 8$, e.g. in the range from 4 to 8. The weights can for example be seen as comprising one or more N-bit numbers. The N-bit number can for example be seen as a fixed-point number, e.g., comprising N bits. N may be 4, 5, 6, 7, or 8. In one or more examples, N may be in the range from 8 to 16.

The N-bit number may for example be a 4-bit number, a 6-bit number 8-bit number, etc. In one or more examples, the number of bits in the second data type is less than the number of bits in the first data type, i.e. N may be less than M. In one or more examples, the difference between M and N is at least three, such as 4 or 8.

In one or more example hearing devices, the neural network is a noise cancelling DNN, an environment classification DNN, or a feedback cancellation DNN.

Noise cancelling Deep Neural Network, DNN, can be seen as a DNN configured for noise cancellation, such as noise reduction. For example, the noise cancelling DNN may be configured to cancel, such as reduce, noise present in the transducer input data.

Environment classification DNN can be seen as a DNN configured for environment classification. For example, the environment classification DNN may be configured to classify the environment in which the hearing device is located or operating. For example, when the hearing device is in an airplane, the environment classification DNN may be configured to classify the environment as an airplane environment. This may advantageously enable the hearing device to tailor or control other processing, such as one or more of noise cancellation, beamforming, voice pickup, feedback cancellation, and hearing compensation, to the environment in turn providing a hearing device with improved sound quality by improved quality and clarity of the audio output signal provided by the receiver, such as to a user of the hearing device.

Feedback cancellation DNN can be seen as a DNN configured for feedback cancellation, such as feedback reduction. For example, the feedback cancellation DNN may be configured to cancel or reduce feedback present in the transducer input data.

In some examples, processing the transducer input data comprises applying one or more of: the noise cancelling DNN, the environment classification DNN, and the feedback cancellation DNN, such as for provision of a network output based on the transducer input data.

The neural network of the hearing device may for example comprise a recursive neural network (RvNN).

The neural network may be a multilayer neural network. The neural network may comprise one or more fully connected layers. In one or more examples, the neural network comprises a first layer, a second layer, and optionally a third layer. The neural network may comprise at least three layers. The neural network may comprise less than eight layers. In one or more examples, the neural network is a 5-layer, recurrent neural network.

In one or more examples, the neural network is a multi-layer, recurrent neural network.

The neural network may be a recurrent neural network (RNN). The neural network may comprise one or more gated recurrent unit (GRU) layers, such as one or more GRU Type 1 layers and/or one or more GRU Type 2 layers. The neural network may comprise one or more Long short-term memory (LSTM) layers.

In one or more examples, the neural network comprises 2 to 6, such as 3, 4, or 5 GRU layers and optionally a fully connected layer.

The neural network may be defined by the number of layers and/or the number of nodes in each layer. Weights or parameters of a layer can for example be seen as indicative of the strength of a connection between two or more nodes of the neural network.

A layer or layers of the neural network, such as one or more or all of first layer, second layer, third layer, and fourth layer, may be a GRU layer, such as a GRU type-2 layer or a GRU type-1 layer. Each layer of the neural network has an input and an output. In one or more examples, a first input to and/or a first output from a first layer of the neural network is of the first data type. In one or more examples, a second input to and/or a second output from a second layer of the neural network is of the first data type. In one or more examples, a third input to and/or a third output from a third layer of the neural network is of the first data type. In one or more examples, a fourth input to and/or a fourth output from a fourth layer of the neural network is of the first data type. In one or more examples, a fifth input to and/or a fifth output from a fifth layer of the neural network is of the first data type.

In other words, interlayer data in the neural network may be of the first data type.

In one or more examples, one or more or all of first layer, second layer, third layer, and fourth layer, comprise one or a plurality of elements applied to the layer input.

A layer, such as one or more or all of first layer, second layer, third layer, and fourth layer of the neural network comprises one or more elements including a first element, optionally a second element, and optionally a third element.

In one or more examples, the first element comprises a matrix multiplication of the input of the layer with weight matrix $W_z$ comprising weights optionally of the second data type, and optionally addition of bias $b_z$

optionally followed by application of a first non-linearity, such as a first data type non-linearity, for provision of an output of the first element. The output of the first element may be of the first data type.

In one or more examples, the second element comprises a matrix multiplication of the input of the layer with weight matrix W, comprising weights optionally of the second data type, and optionally addition of bias b, optionally followed by application of a second non-linearity, such as a first data type non-linearity, for provision of an output of the second element. The output of the second element may be of the first data type.

In one or more examples, the third element comprises a matrix multiplication of the input of the layer with weight matrix $W_n$ comprising weights optionally of the second data type, and optionally addition of bias b, optionally followed by application of a second non-linearity, such as a first data type non-linearity, for provision of an output of the third element. The output of the third element may be of the first data type.

In one or more examples, the matrix multiplication of the first element, the second element and/or the third element, comprises applying K-bit multipliers, such as 8x8 bit multipliers.

In one or more examples, the matrix multiplication of the first element, the second element and/or the third element, comprises applying at least 256 multipliers, such as 8x8 bit multipliers.

The neural network has weights being applied in the different layers of the neural network. The weights include first weight s also denoted w_1_i1, the first weights applied in a first element of one or more layers of the neural network, optionally second weights also denoted w_2_i2, the second weights applied in a second element of one or more layers of the neural network, optionally third weights also denoted w_3_i3, the third weights applied in a third element of one or more layers of the neural network, where i1, i2, i3 are index numbers.

In one or more examples, inputs and/or outputs of one or more layers, such as one or more of first input and/or first output of first layer, second input and/or second output of second layer, third input and/or third output of third layer, and fourth input and/or fourth output of fourth layer, may be or have the first data type.

In one or more examples, the first weights and/or the second weights have the second data type. In one or more examples, the third weights and/or the fourth weights have the second data type. In one or more examples, the first weights, the second weights, the third weights, and the fourth weights, or combinations thereof have the second data type.

In one or more example hearing devices, the neural network has in the range from three to ten layers, such as 4 to 7 layers.

The layer of the neural network can for example be seen as a layer of nodes of the neural network, such as a layer of nodes at a given depth of the neural network.

In one or more example hearing devices, the neural network, such as the first layer and/or the second layer of the neural network, comprises K-bit multipliers, e.g. wherein $K \leq 8$. In one or more examples, K is one, two, four, six, or eight. K may be in the range from 4 to 12. In one or more examples, K may be equal to N. In other words, to apply a neural network may comprise, e.g. in a first layer and/or a second layer, to apply or perform an N-bit times an M2-bit multiplication, e.g. where N is the number of bits in a fixed point number and M2 is the number of mantissa bits in a floating point number.

In one or more examples, the first data type is a 12-bit floating point and the second data type is an 8-bit fixed point number. In one or more examples, the first data type is a 16-bit floating point and the second data type is an 8-bit or a 10-bit fixed point number.

In some examples, the weights having a second data type are combined with transducer input data/network input comprising one or more 12-bit floating point numbers, thereby enabling 8-bit multipliers, such as 8 by 8 multipliers, while for example advantageously enabling the provision of network output having a 24-bit dynamic range.

When the floating point number has 12-bits, this may be sufficient to avoid error propagation, but at the same time low enough that full precision can be retained in accumulation of results during the matrix/vector multiplication.

In one or more example hearing devices, the first input transducer is a first microphone for provision of a first microphone input signal as the first transducer input signal. The first input transducer may be an antenna, such as MI coil or BT antenna, for provision of a wirelessly received audio signal as the first transducer input signal. The first input transducer may be a vibration sensor for provision of a vibration input signal as the first transducer input signal. The vibration sensor is optionally configured for receiving body conducted signal from ear canal.

In one or more example hearing devices, the set of input transducers comprises a second input transducer, such as a second microphone, for provision of a second transducer input signal, such as a second microphone input signal, as part of the transducer input data.

For example, the transducer input signal may comprise a first transducer input signal and/or a second transducer input signal, the first transducer input signal being provided by a first input transducer of the set of input transducers and the second transducer input signal being provided by the second input transducer of the set of input transducers.

In one or more examples, a method of operating a hearing device is disclosed, the method comprising obtaining transducer input data of a first data type; applying a neural network comprising weights to the transducer input data for provision of a network output, wherein the weights of the neural network are of a second data type different from the first data type; and providing an electrical output signal based on the network output.

In one or more example methods, the first data type is a floating point number.

In one or more example methods, the transducer input data are M-bit numbers, e.g. where $M \geq 12$. In one or more example methods, the weights are N-bit numbers, e.g. where $N \leq 8$.

In one or more example methods, the second data type is a fixed point number, such as an 8-bit or 10-bit fixed point number.

In one or more example methods, the neural network, such as one or more layers of the neural network, comprises K-bit multipliers, e.g. wherein $K \leq 8$.

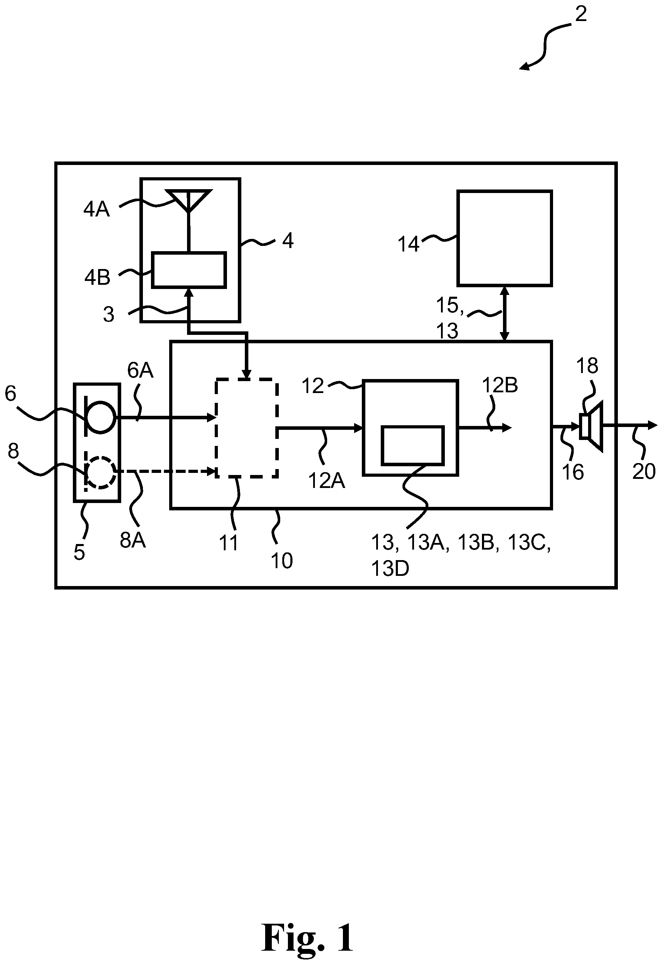

Fig. 1 schematically illustrates an exemplary hearing device 2 according to this disclosure. The hearing device 2 optionally comprises a transceiver module 4 comprising an antenna 4A and a transceiver 4 for wireless communication with one or more external devices, such as a mobile phone and/or another hearing device. The transceiver 4B is for example configured to provide transceiver input data 3 to the processor 10 of the hearing device 2.

The hearing device 2 comprises a set of input transducers 5 for provision of transducer input data, the set of input transducers 5 comprising a first input transducer 6, such as a first microphone, for provision of a first transducer input signal 6A as part of the transducer input data. Optionally, the set of input transducers 5 comprises a second input transducer 8, such as a second microphone, for provision of a second transducer input signal 8A as part of the transducer input data. The hearing device 2 comprises processor 10 for processing transducer input data, such as first transducer input signal 6A and optionally second transducer input signal 8A, and providing an electrical output signal 16 based on the transducer input data. In one or more examples, the hearing device 2 comprises a receiver 18 for converting the electrical output signal 16 to an audio output signal 20. The hearing device 2, such as the processor 10, optionally comprises a pre-processor 11 for transforming input data, such as transducer input data from input transducers 5 and/or transceiver input data from transceiver module 4, to a network input 12A. The processor 10 is configured to apply a neural network 12 to the network input 12A based on the transducer input data and/or the transceiver input data for provision of a network output 12B based on the network input 12A. The network input 12A is based on the first transducer input data 6A and optionally the second transducer input data 8A, and the electrical output signal 16 is based on the network output 12B. For example, the network output 12B may be used as a control input for processing the input signals 6A, 8B, e.g. in a post-processor (not shown) according to the network output 12B. In one or more examples, the network output 12B may be transformed, e.g. in a post-processor, to form the electrical output signal 16,

The network input 12A has a first data type, such as a 12-bit floating point number, and weights 13, such as one or more first weights 13A, second weights 13B, third weights 13C, and fourth weights 13D of the neural network have a second data type, such as an 8-bit fixed number, different from the first data type.

The hearing device 2 comprises a memory 14, for example configured to communicate data 15, such as weights 13, with the processor 10 of the hearing device 2.

The network input 12A for example comprises one or more floating point numbers, i.e. has a first data type being floating point. The weights 13 for example comprise one or more fixed point numbers, i.e. have a second data type being fixed point number.

The memory 14 may for example be configured to store transducer input data, weights 13, first data type, second data type, floating point number, fixed point number, M-bit number, N-bit number, K-bit multiplier and/or the neural network in a part of the memory.

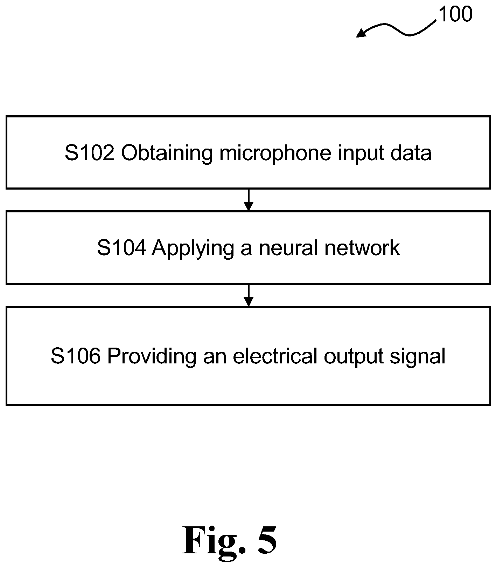

The processor 10 is optionally configured to perform any of the operations disclosed in Fig. 5, such as any one or more of: S102, S104, S106. The operations of the processor 10 may be embodied in the form of executable logic routines, e.g., lines of code, software programs, etc., that are stored on a non-transitory computer readable medium, e.g., the memory 14, and are executed by the processor 10.

Furthermore, the operations of the hearing device 2 may be considered a method that the hearing device 2 is configured to carry out. Also, while the described functions and operations may be implemented in software, such functionality may as well be carried out via dedicated hardware or firmware, or some combination of hardware, firmware and/or software.

The memory 14 may be one or more of a buffer, a flash memory, a hard drive, a removable media, a volatile memory, a non-volatile memory, a random access memory (RAM), or other suitable device. In a typical arrangement, the memory 14 may include a non-volatile memory for long term data storage and a volatile memory that functions as system memory for the processor 10. The memory 14 may exchange data with the processor 10 over a data bus (not shown). Control lines and an address bus between the memory 14 and the processor 10 also may be present (not shown in Fig. 1). The memory 14 is considered a non-transitory computer readable medium.

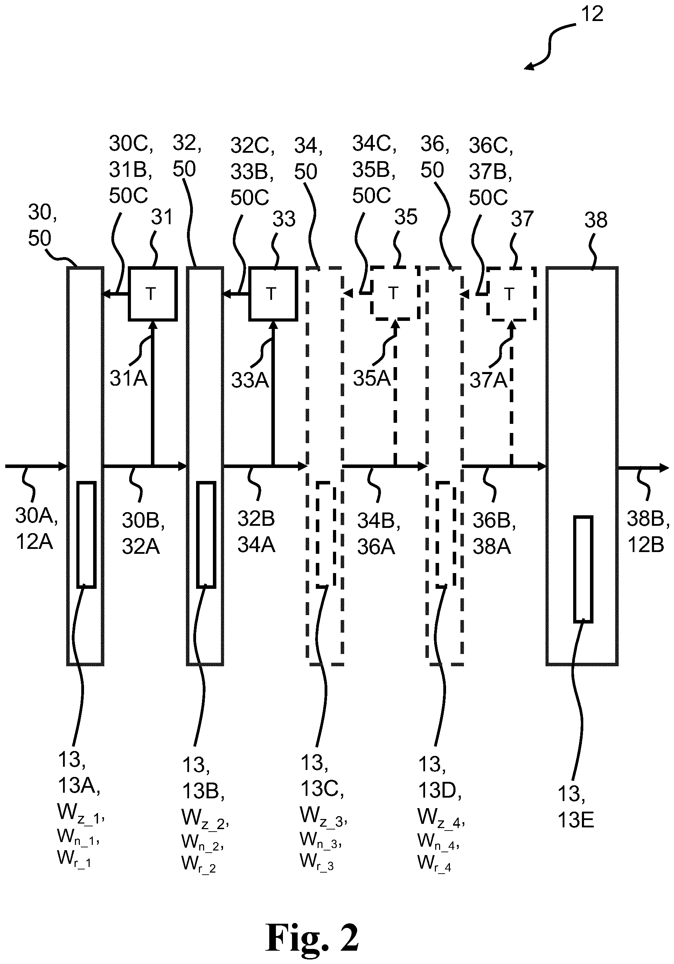

Fig. 2 schematically illustrates an example neural network according to this disclosure. The neural network 12 is a 5-layer neural network with four layers 30, 32, 34, 36 optionally being GRU layers and a fifth layer 38 optionally being a fully connected layer. It is to be understood that any of layers 30, 32, 34, 36, 38 may be implemented as other types of neural network layers. The first layer 30 has a first input 30A forming at least a part of the network input 12A. Transducer input data comprising one or both of first transducer input signal 6A and second transducer input signal 8A or transformed transducer input data are optionally fed as, e.g. at least a part of, network input 12A to the neural network 12. In one or more examples, the first transducer input signal 6A and/or the second transducer input signal 8A are pre-processed prior to being fed as network input 12A to the neural network 12. The network input 12A has a first data type, such as 12-bit floating point number, and weights of the neural network, such as one or more of weights 13A of the first layer 30, weights 13B of the second layer 32, weights 13C of the third layer 34, weights 13D of the fourth layer 36, and weights 13E of the fifth layer 38, have a second data type, such as 8-bit fixed point number, different from the first data type.

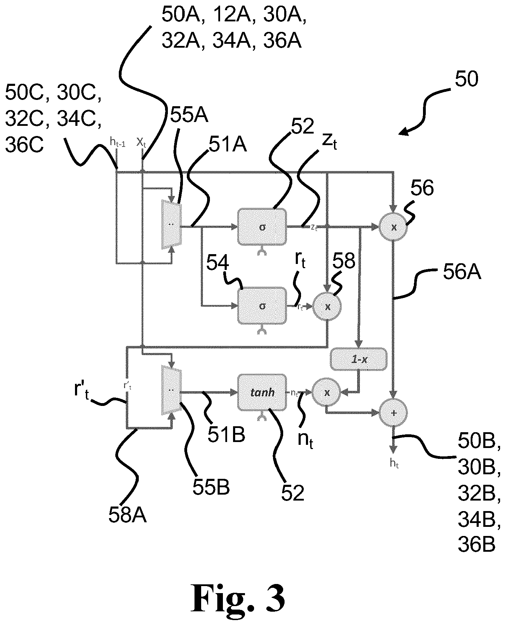

The first layer 30 of the network 12 has a first secondary layer input 30C, such as secondary layer input 50C of GRU layer 50 as described below with reference to Fig. 3. The first layer 30 has a first output 30B, such as output 50B of GRU layer 50 as described below with reference to Fig. 3. The first output 30B is fed as second input 32A to a second layer 32 and as first feedback input 31A to first feedback element 31. The first feedback element 31 applies feedback and/or delay to the first output 30B and feeds first feedback output 31B as first secondary input 30C to the first layer 30. The first feedback element 31 and functionality thereof may be integrated in the first layer 30, e.g. such that the first output 30B is fed directly as first secondary input 30C to the first layer. The first layer 30 includes one or more elements respectively applying weight matrices, such as $W_{z\_1}$, optionally $W_{r\_1}$, and $W_{n\_1}$, with weights of the second data type to layer input 30A, 12A of the first data type.

The second layer 32 of the network 12 has a second secondary layer input 32C, such as secondary layer input 50C of GRU layer 50 as described below with reference to Fig. 3. The second layer 32 has a second output 32B, such as output 50B of GRU layer 50 as described below with reference to Fig. 3. The second output 32B is fed as third input 34A to a third layer 34 and as second feedback input 33A to second feedback element 33. The second feedback element 33 applies feedback and/or delay to the second output 32B and feeds second feedback output 33B as second secondary input 32C to the second layer 32. The second feedback element 33 and functionality thereof may be integrated in the second layer 32, e.g. such that the second output 32B is fed directly as second secondary input 32C to the second layer. The second layer 32 optionally includes one or more elements respectively applying weight matrices, such as $W_{z\_2}$, optionally $W_{r\_2}$, and $W_{n\_2}$, with weights of the second data type to layer input 30B, 32A of the first data type.

The third layer 34 of the network 12 has a third secondary layer input 34C, such as secondary layer input 50C of GRU layer 50 as described below with reference to Fig. 3. The third layer 34 has a third output 34B, such as output 50B of GRU layer 50 as described below with reference to Fig. 3. The third output 34B is fed as fourth input 36A to a fourth layer 36 and as third feedback input 35A to third feedback element 35. The third feedback element 35 applies feedback and/or delay to the third output 34B and feeds third feedback output 35B as third secondary input 34C to the third layer 34. The third feedback element 35 and functionality thereof may be integrated in the third layer 34, e.g. such that the third output 34B is fed directly as third secondary input 34C to the third layer. The third layer 34 optionally includes one or more elements respectively applying weight matrices, such as $W_{z\_3}$, optionally $W_{r\_3}$, and $W_{n\_3}$, with weights of the second data type to layer input 32B, 34A of the first data type.

The fourth layer 36 of the network 12 has a fourth secondary layer input 36C, such as secondary layer input 50C of GRU layer 50 as described below with reference to Fig. 3. The fourth layer 36 has a fourth output 36B, such as output 50B of GRU layer 50 as described below with reference to Fig. 3. The fourth output 36B is fed as fifth input 38A to a fifth layer 38 and as fourth feedback input 37A to fourth feedback element 37. The fourth feedback element 37 applies feedback and/or delay to the fourth output 36B and feeds fourth feedback output 37B as fourth secondary input 36C to the fourth layer 36. The fourth feedback element 37 and functionality thereof may be integrated in the fourth layer 36, e.g. such that the fourth output 36B is fed directly as fourth secondary input 36C to the fourth layer. The fourth layer 36 optionally includes one or more elements respectively applying weight matrices, such as $W_{z\_4}$, optionally $W_{r\_4}$, and $W_{n\_4}$, with weights of the second data type to layer input 34B, 36A of the first data type.

Fig. 3 illustrates an example GRU layer 50. The GRU layer 50 may be implemented as one or more, e.g. all of, first layer 30, second layer 32, third layer 34, and fourth layer 36 of neural network 12 in Fig. 2. The GRU layer 50 has a layer input 50A also denoted $x_t$ of a first data type and a secondary layer input 50C also denoted $h_{t-1}$ that are processed for provision of a layer output 50B (also of the first data type) that is fed to a subsequent layer, wherein processing of the layer input 50A comprises applying weights of a second data type to the layer input 50A or first intermediate data 51A based on the layer input 50A of the first data type. The GRU layer 50 comprises a first element 52 comprising a matrix multiplication with weight matrix $W_z$ and optionally addition of bias $b_z$ followed by application of a first non-linearity for provision of output $z_t$, and a second element 54 comprising a matrix multiplication with weight matrix $W_r$ and optionally addition of bias $b_r$ followed by application of a second non-linearity for provision of output $r_t$. The GRU layer 50 comprises a third element 55 comprising a matrix multiplication with weight matrix $W_n$ and optionally addition of bias $b$, followed by application of a third non-linearity, such as hyperbolic tangent, for provision of output $n_t$. The input to the non-linearity is of the first type to maintain precision. The weights of weight matrices $W_z$, $W_r$ and/or $W_n$ are of the second data type. In other words, the one or more, such as all, of the first non-linearity, the second non-linearity, and the third non-linearity may be a floating point non-linearity and/or a first data type non-linearity.

The GRU layer 50 comprises first concatenator 55A having the layer input 50A and the secondary layer input 50C also denoted $X_t$ as input and first intermediate data 51A as output.

The output ($z_t$) of the first element 52 is multiplied with secondary layer input 50C also denoted $h_{t-1}$ in first multiplier 56 for provision of output 56A. The first multiplier 56 may be a floating point multiplier and/or a first data type multiplier.

The output ($r_t$) of the second element 54 is multiplied with secondary layer input 50C also denoted $h_{t-1}$ in second multiplier 58 for provision of output 58A also denoted $r'_t$. The second multiplier may be a floating point multiplier and/or a first data type multiplier.

The GRU layer 50 comprises second concatenator 55B having output 58A of the second multiplier 58 and the layer input 50A also denoted $X_t$ as input and second intermediate data 51B as output. The intermediate data 51A, 51B may be of the first data type.

The GRU layer 50 implements the following formulation and structure:

$$z_t = \sigma(W_z[x_t, h_{t-1}] + b_z)$$

$$r_t = \sigma(W_r[x_t, h_{t-1}] + b_r)$$

$$r'_t = r_t * h_{t-1}$$

$$n_t = \tanh(W_n[x_t, r'_t] + b_n)$$

$$h_t = (1 - z_t) * n_t + z_t * h_{t-1},$$

where $W_z$, $W_r$, $W_n$ are weight matrices comprising weights of the second data type. $\sigma$ is a nonlinearity, e.g.

$$y = \sigma(x) = \frac{1}{1 - e^{-x}}$$ computed element-wise and *tanh* is a nonlinearity, e.g. $y = \tanh(x)$ computed element-wise. Weight matrices $W_z$, $W_r$, $W_n$ also indicated with index 1,2,3,4, elsewhere comprise weights of the second data type.

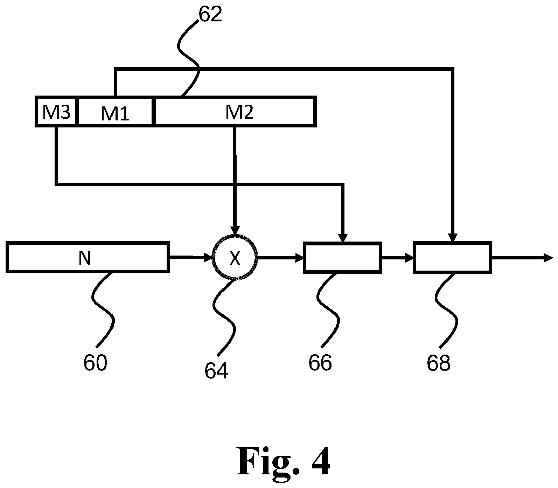

Fig. 4 shows a diagram with an example multiplier for multiplication of an N-bit (N=8) fixed point number 60 (second data type) with a 12-bit floating point number 62 (first data type), such as fp12, e.g. used in the matrix multiplication of one or more elements and/or layers of the neural network, e.g. neural network 12. The 8-bit fixed point number is multiplied with the M2 (M2=8) mantissa bits of the floating point number in an 8X8 bit multiplier 64 also denoted an 8-bit multiplier. The sign bit M3 of the floating point number 60 is applied to the output of the multiplier in signer 66 and the exponent bits M3 of the floating point number 60 are applied in shifter 68. The output (31 bit dynamic range) from the shifter 66 is fed to an adder for matrix multiplication, e.g. via accumulator, and converted back to the first data type for further processing in the layer.

Fig. 5 is a flow diagram of an exemplary method 100 according to this disclosure. The method may be performed by the hearing device, such as using the processor, disclosed herein, such as hearing device 2 and processor 10 of Fig. 1. The method 100 of operating a hearing device comprises obtaining S102 transducer input data of a first data type. The method 100 comprises applying S104 a neural network comprising weights to the transducer input data for provision of a network output. The weights of the neural network are of a second data type different from the first data type. The method 100 comprises providing S106 an electrical output signal based on the network output.

The use of the terms "first", "second", "third" and "fourth", "primary", "secondary", "tertiary" etc. Does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

LIST OF REFERENCES

| | |
|---|---|
| 2 | hearing device |
| 3 | transceiver input data |
| 4 | transceiver module |
| 4A | antenna |
| 4B | transceiver |
| 5 | set of input transducers |
| 6 | first transducer, first microphone |
| 6A | first transducer input signal |
| 8 | second transducer |
| 8A | first transducer input signal |
| 10 | processor |
| 11 | pre-processor |
| 12 | neural network |
| 12A | network input |
| 12B | network output |
| 13 | weights of neural network |
| 13A | first weights of first layer in neural network |
| 13B | second weights of second layer in neural network |
| 13C | third weights of third layer in neural network |
| 13D | fourth weights of fourth layer in neural network |
| 13E | fifth weights of fourth layer in neural network |
| 14 | memory |
| 15 | data |
| 16 | electrical output signal |
| 18 | receiver |
| 20 | audio output signal |
| 30 | first layer of neural network |
| 30A | first input of first layer of neural network |
| 30B | first output of first layer of neural network |
| 31 | first feedback element |
| 31A | first feedback input |
| 31B | first feedback output |
| 32 | second layer of neural network |
| 32A | second input of second layer of neural network |
| 32B | second output of second layer of neural network |
| 33 | second feedback element |
| 33A | second feedback input |
| 33B | second feedback output |
| 34 | third layer of neural network |
| 34A | third input of third layer of neural network |
| 34B | third output of third layer of neural network |
| 35 | third feedback element |
| 35A | third feedback input |
| 35B | third feedback output |
| 36 | fourth layer of neural network |
| 36A | fourth input of fourth layer of neural network |
| 36B | fourth output of fourth layer of neural network |
| 37 | fourth feedback element |
| 37A | fourth feedback input |
| 37B | fourth feedback output |
| 38 | fifth layer of neural network |
| 38A | fifth input of fifth layer of neural network |
| 38B | fifth output of fifth layer of neural network |
| 50 | GRU layer |
| 50A | layer input |
| 50B | layer output |
| 50C | secondary layer input |
| 51A | first intermediate data |
| 51B | second intermediate data |
| 52 | first element |
| 54 | second element |
| 55 | third element |
| 55A | first concatenator |
| 55B | second concatenator |
| 56 | first multiplier |
| 56A | output from first multiplier |
| 58 | second multiplier |
| 58A | output from second multiplier |
| 60 | fixed point number |
| 62 | floating point number |
| 64 | K-bit multiplier |
| 66 | signer |
| 68 | shifter |
| 100 | method of operating a hearing device |
| S102 | obtaining transducer input data of a first data type |

S104 applying a neural network for provision of a network output

S106 providing an electrical output signal based on the network output.

## Claims

1. A hearing device comprising:

   a set of input transducers for provision of transducer input data, the set of input transducers comprising a first input transducer for provision of a first transducer input signal as part of the transducer input data;
   a processor for processing transducer input data and providing an electrical output signal based on the transducer input data; and
   a receiver for converting the electrical output signal to an audio output signal,

   wherein the processor is configured to apply a neural network to a network input based on the transducer input data for provision of a network output, the electrical output signal based on the network output, wherein the network input has a first data type and weights of the neural network have a second data type different from the first data type.

2. Hearing device according to claim 1, wherein the first data type is a floating point number.

3. Hearing device according to any one of claims 1-2, wherein the network input is M-bit numbers, where M $\geq$ 12.

4. Hearing device according to any one of claims 1-3, wherein the second data type is a fixed point number.

5. Hearing device according to any one of claims 1-4, wherein the weights are N-bit numbers, where N $\leq$ 8.

6. Hearing device according to any one of claims 1-5, wherein the neural network comprises K-bit multipliers, wherein K $\leq$ 8.

7. Hearing device according to any one of claims 1-6, wherein the neural network is a noise cancelling DNN, an environment classification DNN, or a feedback cancellation DNN.

8. Hearing device according to any one of claims 1-7, wherein the neural network has in the range from three to ten layers.

9. Hearing device according to any one of claims 1-8, wherein the first input transducer is a first microphone for provision of a first microphone input signal as the first transducer input signal.

10. Hearing device according to any one of claims 1-9, wherein the set of microphones comprises a second input transducer for provision of a second transducer input signal as part of the transducer input data.

11. Method of operating a hearing device, the method comprising:

    obtaining transducer input data;
    applying a neural network comprising weights to a network input based on the transducer input data for provision of a network output, wherein the network input is of a first data type and weights of the neural network are of a second data type different from the first data type; and
    providing an electrical output signal based on the network output.

12. Method according to claim 11, wherein the first data type is a floating point number.

13. Method according to any one of claims 11-12, wherein the network input is M-bit numbers, where M $\geq$ 12, and wherein the weights are N-bit numbers, where N $\leq$ 8.

14. Method according to any one of claims 11-13, wherein the second data type is a fixed point number.

15. Method according to any one of claims 11-14, wherein the neural network comprises K-bit multipliers, wherein K $\leq$ 8.

2

4A

4B

3

4

14

15,
13

6

6A

8

8A

5

18

12

12A

12B

16

20

11

10

13, 13A, 13B, 13C,
13D

**Fig. 1**

**Fig. 2**

**Fig. 3**

Fig. 4

100

S102 Obtaining microphone input data

S104 Applying a neural network

S106 Providing an electrical output signal

# Fig. 5

| Europäisches Patentamt European Patent Office Office européen des brevets | **EUROPEAN SEARCH REPORT** | Application Number EP 24 16 6701 |
| --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WO 2022/081260 A1 (STARKEY LABS INC [US]) 21 April 2022 (2022-04-21) * the whole document * | 1-15 | INV. H04R25/00 G06N3/045 G06N3/063 |
| A | WO 2022/051032 A1 (STARKEY LABS INC [US]) 10 March 2022 (2022-03-10) * the whole document * | 1-15 | |
| A | WO 2021/242570 A1 (STARKEY LABS INC [US]) 2 December 2021 (2021-12-02) * the whole document * | 1-15 | |
| A | EP 3 229 496 A1 (STARKEY LABS INC [US]) 11 October 2017 (2017-10-11) * the whole document * | 1-15 | |
| A | US 9 836 692 B1 (GULLAND WILLIAM JOHN [US]) 5 December 2017 (2017-12-05) * the whole document * | 1,11 | |
| A | WO 92/01266 A1 (SIEMENS AG [DE]) 23 January 1992 (1992-01-23) * the whole document * | 1,11 | TECHNICAL FIELDS SEARCHED (IPC) H04R G06N |
| T | LIANGZHEN LAI ET AL: "Deep Convolutional Neural Network Inference with Floating-point Weights and Fixed-point Activations", ARXIV.ORG, CORNELL UNIVERSITY LIBRARY, 201 OLIN LIBRARY CORNELL UNIVERSITY ITHACA, NY 14853, 9 March 2017 (2017-03-09), XP080755374, * the whole document * | | |

The present search report has been drawn up for all claims

| Place of search | Date of completion of the search | Examiner |
| --- | --- | --- |
| Munich | 2 September 2024 | Sucher, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 6701

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2024

| Patent document cited in search report | Publication date | Patent family member(s) | | Publication date |
|---|---|---|---|---|
| WO 2022081260 A1 | 21-04-2022 | EP | 4229876 A1 | 23-08-2023 |
| | | US | 2023362559 A1 | 09-11-2023 |
| | | WO | 2022081260 A1 | 21-04-2022 |
| WO 2022051032 A1 | 10-03-2022 | EP | 4209016 A1 | 12-07-2023 |
| | | US | 2023276182 A1 | 31-08-2023 |
| | | WO | 2022051032 A1 | 10-03-2022 |
| WO 2021242570 A1 | 02-12-2021 | EP | 4158909 A1 | 05-04-2023 |
| | | US | 2023292074 A1 | 14-09-2023 |
| | | WO | 2021242570 A1 | 02-12-2021 |
| EP 3229496 A1 | 11-10-2017 | EP | 3229496 A1 | 11-10-2017 |
| | | EP | 3726857 A1 | 21-10-2020 |
| | | US | 2017295439 A1 | 12-10-2017 |
| | | US | 2020059740 A1 | 20-02-2020 |
| | | US | 2021243536 A1 | 05-08-2021 |
| | | US | 2023328464 A1 | 12-10-2023 |
| US 9836692 B1 | 05-12-2017 | CN | 108427991 A | 21-08-2018 |
| | | CN | 116415637 A | 11-07-2023 |
| | | DE | 102018103303 A1 | 16-08-2018 |
| | | DK | 3361422 T3 | 31-01-2022 |
| | | EP | 3361422 A1 | 15-08-2018 |
| | | GB | 2561669 A | 24-10-2018 |
| | | HK | 1259158 A1 | 29-11-2019 |
| | | TW | M573476 U | 21-01-2019 |
| | | TW | 201835818 A | 01-10-2018 |
| | | TW | 202131233 A | 16-08-2021 |
| | | TW | 202301201 A | 01-01-2023 |
| | | US | 9836692 B1 | 05-12-2017 |
| | | US | 2018232626 A1 | 16-08-2018 |
| | | US | 2020226445 A1 | 16-07-2020 |
| | | WO | 2018152205 A1 | 23-08-2018 |
| WO 9201266 A1 | 23-01-1992 | EP | 0537205 A1 | 21-04-1993 |
| | | WO | 9201266 A1 | 23-01-1992 |

EPO FORM P0459

For more details about this annex : see Official Journal of the European Patent Office, No. 12/82